# EUROPÄISCHE PATENTSCHRIFT

(11) **EP 2 006 634 B1**
(45) Veröffentlichungstag und Bekanntmachung des Hinweises auf die Patenterteilung: **01.03.2017**
(21) Anmeldenummer: 08010247.8
(22) Anmeldetag: 05.06.2008
(51) Int. Cl.: G01B 5/00, G01B 21/04, B23Q 1/26

(54) **Vorrichtung zur Halterung zu vermessender Bauteile, insbesondere Blechbauteile einer Fahrzeugkarosserie, in einer Referenzposition**
Device to hold components, in particular sheet metal components for vehicle body work, for measuring in a reference position
Dispositif de fixation pour composants de mesure, en particulier composants en tôle d'une carrosserie de véhicule, dans une position de référence

(30) Priorität: 18.06.2007 DE 102007028436
(43) Veröffentlichungstag der Anmeldung: 24.12.2008
(73) Patentinhaber: Carl Zeiss Fixture Systems GmbH, 66636 Tholey (DE)
(72) Erfinder:
(74) Vertreter: Bernhardt, Reinhold

(56) Entgegenhaltungen:
- EP-A2- 1 155 782
- EP-A2- 1 302 275
- EP-A2- 1 477 268
- DE-C1- 3 706 389
- JP-A- 2006 241 930
- US-A- 3 820 247
- US-A- 5 815 992
- US-A- 6 058 987

## Beschreibung

Die Erfindung betrifft eine Vorrichtung zur Halterung zu vermessender Blechbauteile einer Fahrzeugkarosserie in einer Referenzposition, mit einem an das Bauteil anzulegenden Anschlagelement, einem das Anschlagelement tragenden Basisteil und Einrichtungen zur Verstellung der Position des Anschlagelements relativ zu dem Basisteil, die wenigstens ein einteiliges, als Platte ausgebildetes und zwischen dem Anschlagelement und dem Basisteil angeordnetes Abstandhalterteil umfassen.

In der US 3,820,247 ist ein Mechanismus zur Winkelverstellung einer Sinusplatte beschrieben. Der Mechanismus umfasst ein keilförmiges Abstandhalterteil, das zur Einstellung in verschiedenen Positionen mit zwei unterschiedlich hohen Stufen versehen ist und auf einem Trägerteil verschiebbar ist, das mit einer Schräge versehen ist, auf dem sich das Abstandhalterteil verschieben lässt. Je nach Position des Abstandhalterteils auf dem Trägerteil lassen sich verschiedene Abstände einstellen.

Eine weitere Vorrichtung zur Halterung zu vermessender und zu bearbeitender Werkstücke geht aus der EP 1 477 268 A2 hervor.

Die EP 1 302 257 A1 beschreibt eine Vorrichtung zum Halten zylindrischer Werkstücke an ihrer Mantelfläche, welche drei Halteelemente mit je einem Haltebacken aufweist, wobei zwei der Halteelemente zur Anpassung an unterschiedliche Werkstückdurchmesser in zueinander im Winkel stehenden Führungen durch Verstellelemente verschieb- und positionierbar sind.

Aus der DE 37 06 389 C1 geht eine Haltevorrichtung mit einer Grundplatte und einer Auflageplatte sowie einem Abstandsstück zwischen Grund- und Auflageplatte hervor. Das Abstandsstück besteht aus zwei, zur Abstandsänderung zwischen Grund- und Auflageplatte gegeneinander verschiebbaren Keilplatten. Eine der vorangehenden ähnliche Vorrichtung mit Keilplatten ist der JP 2006 241930 A zu entnehmen. Die Keilplatten weisen jeweils eine Vielzahl von Abstufungen auf.

Aus der US 5 815 992 geht ein verstellbares Abstandsstück mit einem gestuften Basisteil und einem weiteren Teil hervor. Eine Abstufung des weiteren Teils greift in die Stufung des Basisteils ein und ist auf dem Basisteil in verschiedenen Höhen fixierbar.

Eine Vorrichtung der eingangs erwähnten Art, die einen in seiner Position verstellbaren Anschlagelement für eine Halterungsvorrichtung zur Halterung eines Werkstücks beschreibt, geht aus der EP 1 155 782 A2 hervor. Die Position des Anschlagelements ist durch zwischen dem Anschlagelement und einem Basisteil einzulegende Distanzstücke einstellbar ist. Das Einlegen der Distanzstücke erfordert einen verhältnismäßig großen Arbeitsaufwand.

Der Erfindung liegt die Aufgabe zugrunde, eine neue Vorrichtung der obengenannten Art zu schaffen, bei welcher der zur Verstellung erforderliche Arbeitsaufwand verringert ist.

Die diese Aufgabe lösende Vorrichtung nach der Erfindung ist dadurch gekennzeichnet, dass das Abstandhalterteil zwischen dem Basisteil und dem Anschlagelement quer zur Verstellrichtung des Anschlagelements und parallel zur Plattenebene verschiebbar ist und mehrere, das Basisteil und das Anschlagelement zueinander in unterschiedlichen Abständen haltende Abschnitte unterschiedlicher Plattendicke aufweist, wobei der Unterschied zwischen den Abständen jeweils einer Verschiebung des Anschlagelements um eine Blechstärke des gehaltenen Blechbauteils entspricht und zwischen den Abschnitten des Abstandhalterteils eine Rampe gebildet ist.

Vorteilhaft bedarf es zur Verstellung des Anschlagelements um eine Blechstärke lediglich einer Verschiebung des Abstandhalterteils.

Die Halterungsvorrichtung lässt sich mit geringem Aufwand umrüsten, wenn sich an der Anschlag- bzw. Halterungsstelle die Blechstärke verdoppelt oder verdreifacht. So können z.B. die eine Karosserieseitenwand bildenden Einzelteile (Außenhaut, Innenhaut, Mittelteil) zunächst einzeln und dann die aus diesen Teilen zusammengesetzte Karosserieseitenwand insgesamt gehalten und vermessen werden. Zur Umrüstung der Halterungsvorrichtung ist das Anschlagelement lediglich um die erforderliche Zahl von Blechstärken zu verstellen.

Insbesondere können mehrere Abstandhalterteile aufeinander angeordnet sein, so dass sich durch Kombination der jeweiligen Abschnitte eine Vielzahl von Positionen des Anschlagelements ergibt.

In der bevorzugten Ausführungsform der Erfindung sind benachbarte Abstandhalterteile in zueinander senkrechten Richtungen versetzbar.

Die Abstandhalterteile können insbesondere in einer Führung bewegbar, insbesondere verschiebbar, sein. Daneben ist auch eine Drehung eines Abstandhalterteils denkbar, um die verschiedenen Abschnitte zwischen dem Anschlagelement und dem Basisteil zu platzieren.

In weiterer Ausgestaltung der Erfindung ist eine das Anschlagelement und das Basisteil zusammenhaltende Feder vorgesehen. Vorzugsweise ist das Anschlagelement gegen die Kraft dieser Feder verstellbar. Alternativ könnte die Feder vor der Verstellung gelöst und danach wieder gespannt werden.

Insbesondere bei Bewegung des Abstandhalterteils unter Spannung durch die Feder ist zwischen den Abschnitten des Abstandhalterteils zweckmäßig eine Rampe gebildet sein, auf der das Basisteil, das Anschlagelement oder ein an dem betreffenden Abstandhalterteil anliegendes weiteres Abstandhalterteil leichtgängig gleitet.

In der bevorzugten Ausführungsform der Erfindung weist das Abstandhalterteil eine Aussparung auf, die von einem Führungselement einer das Anschlagelement in Verstellrichtung leitenden Führung durchsetzt ist.

Vorzugsweise umfasst die Führung einen von dem Anschlagelement oder Basisteil vorstehenden Stift, der in einer Führungsbohrung des betreffenden anderen Teils gleitet. Insbesondere ein zweiter, als Drehsicherung dienender Stift kann als Schwertstift ausgebildet sein, der eine verklemmungsfreie, leichtgängige Verschiebung des Anschlagelements in Verstellrichtung sichert.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine Vorrichtung nach der Erfindung in einer teilweise geschnittenen Seitenansicht,
- Fig. 2: die Vorrichtung von Fig. 1 in einer Draufsicht,
- Fig. 3: ein in der Vorrichtung von Fig. 1 verwendetes Abstandhalterteil, und
- Fig. 4: ein weiteres Ausführungsbeispiel für eine Vorrichtung nach der Erfindung.

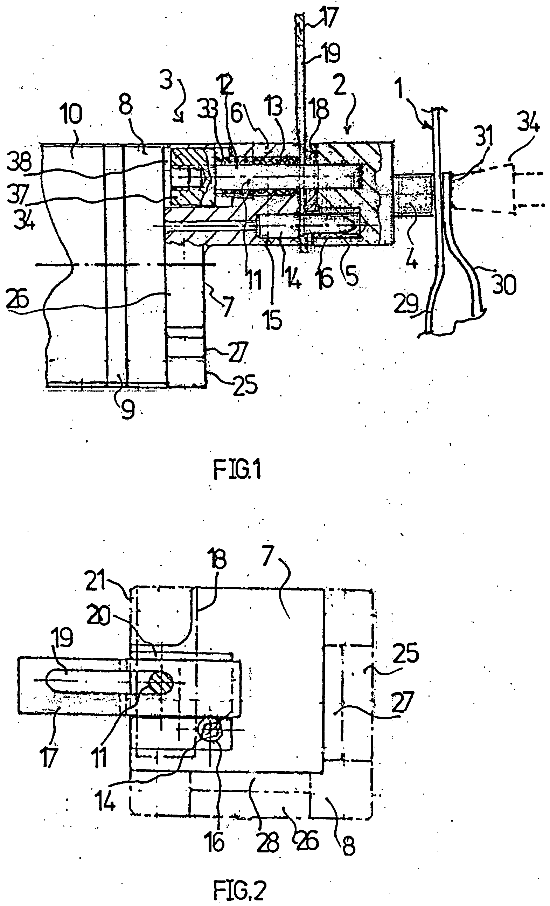

Eine Vorrichtung zur Halterung eines zu vermessenden Karosseriebauteils einer Fahrzeugkarosserie in einer Referenzposition, z.B. einer in Fig. 1 ausschnittsweise dargestellten Karosserieseitenwand 1, weist ein zur Anlage gegen das Karosseriebauteil bestimmtes Anschlagelement 2 sowie ein das Anschlagelement 2 tragendes Basisteil 3 auf.

Das Anschlagelement 2 umfasst einen Anschlagzapfen 4, der einem Gegenhalter 34 gegenüber liegt, und einen mit dem Anschlagzapfen 4 verbundenen Block 5. Das Basisteil 3 weist einen im Querschnitt mit dem Block 5 übereinstimmenden Block 6 und eine mit dem Block 6 verbundene Grundplatte 7 auf.

Die Grundplatte 7 ist über einen Trägerkopf 8, auf dem die Grundplatte 7 in gewünschten Positionen X,Y senkrecht zur Zylinderachse des Anschlagzapfens 4 fixierbar ist, mit einem im Querschnitt quadratischen Halterungsprofil 10 verbunden. Zur Einstellung von Positionen in X-Y-Richtung dienen zwischen der Grundplatte 7 und von der Grundplatte 7 vorstehenden Anschlägen 25 und 26 angeordnete Distanzstücke 27 und 28. Der Trägerkopf 8 umfasst ferner eine Distanzplatte 9 zur Einstellung gewünschter Positionen des Anschlagelements in der zur X-Y-Richtung senkrechten Z-Richtung.

Die vorangehend beschriebene Vorrichtung kann Bestandteil eines viele solche Vorrichtungen aufweisenden Halterungssystems für z.B. ein Karosseriebauteil sein.

Ein in den Block 5 des Anschlagelements 2 eingepasster Führungsstift 11 steht in eine Bohrung 12 in dem Block 6 hinein vor und ist in einer in der Bohrung 12 angeordneten Buchse 13 geführt.

Eine den Führungsstift 11 umgebende Schraubenfeder 33 liegt mit einem Ende gegen die Buchse 13 und mit dem anderen Ende gegen einen Block 37 an, der in einer Einsenkung 38 in dem Block 6 in Längsrichtung des Führungsstifts 11 verschiebbar und mit dem Führungsstift 11 verbunden ist.

Ein in den Block 6 eingepasster Stift 14, der wie die Achse des Führungsstifts 11 parallel zur Zylinderachse des Zapfens 4 verläuft, ragt mit einem als Schwertstift ausgebildeten Abschnitt in eine Buchse 16 in einer Bohrung 15 in dem Block 5 des Anschlagelements 2 hinein.

Zwischen dem Anschlagelement 2 und dem Basisteil 3 sind zwei Abstandhalterteile 17 und 18 in Form länglicher Platten angeordnet, die jeweils eine Aussparung 19 in Form eines Langlochs aufweisen. Der Führungsstift 11 durchsetzt die betreffenden Aussparungen 19 der einander überkreuzend angeordneten Abstandhalterteile 17 und 18. An dem Block 5 ist eine Randerhöhung 20 und am Block 6 eine Randerhöhung 21 gebildet. Durch den in die Aussparung 19 eingreifenden Führungsstift und die Randerhöhungen 20 und 21 sind jeweils Führungen für die Abstandhalterteile 17 und 18 gebildet, in denen sich die Abstandhalterteile 17 und 18 senkrecht zu den Stiftachsen in zueinander senkrechten Richtungen verschieben lassen.

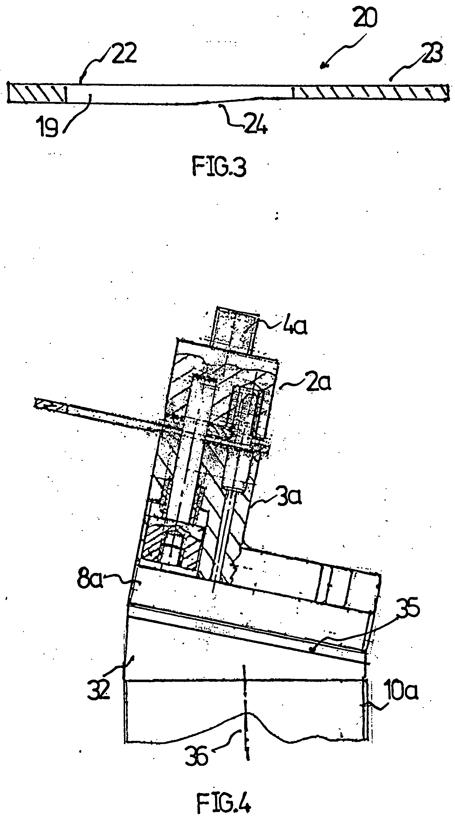

Wie insbesondere Fig. 3 zu entnehmen ist, weist das Abstandhalterteil 17 zwei Abschnitte 22 und 23 mit unterschiedlicher Plattendicke auf. Die Plattendicken unterscheiden sich um die Stärke des Bleches, aus welchem das Karosseriebauteil 1 hergestellt ist. Eine dem Block 6 zugewandte Rampe 24 bildet einen Übergang zwischen den Abschnitten 22 und 23. Die Rampe des in gleicher Weise ausgebildeten Abstandhalterteils 18 ist dem Block 5 zugewandt.

Durch Verschiebung der Abstandhalterteile 17 und 18, lässt sich das Anschlagelement 2 in Richtung der Zylinderachse des Anschlagzapfens 4 jeweils um eine Blechstärke verschieben, wobei in dem betreffenden Ausführungsbeispiel zweimal eine Verschiebung um eine Blechstärke möglich ist.

Mit Hilfe der beschriebenen Halterungsvorrichtung lassen sich sowohl die komplette Karosserieseitenwand 1, die aus mehreren Wandteilen 29 und 30 besteht und an Verbindungsstellen 31 zwei oder mehr Blechlagen aufweist, als auch deren Einzelteile 29, 30 vermessen. Beim Wechsel der zu haltenden Messobjekte bedarf es nur einer Verschiebung der Abstandhalterteile.

Fig. 4 zeigt eine Halterungsvorrichtung, bei der zwischen einem Trägerkopf 8a und einem Trägerprofil 10a ein Distanzblock 32 mit einer zur Längsachse 36 des Trägerprofils 10a geneigten Trägerebene 35 angeordnet ist. Im Übrigen entspricht die Vorrichtung von Fig. 4 der Vorrichtung von Fig. 1.

Durch Blöcke, wie den Block 32, kann die Achse des Anschlagzapfens 4a in beliebiger Weise relativ zu der Längsachse 36 des Trägerprofils 10a ausgerichtet werden.

## Patentansprüche

1. Vorrichtung zur Halterung zu vermessender Blechbauteile (1) einer Fahrzeugkarosserie in einer Referenzposition, mit einem an das Blechbauteil (1) anzulegenden Anschlagelement (2), einem das Anschlagelement (2) tragenden Basisteil (3) und Einrichtungen zur Verstellung der Position des Anschlagelements (2) relativ zu dem Basisteil (3), die wenigstens ein einteiliges, als Platte ausgebildetes und zwischen dem Anschlagelement (2) und dem Basisteil (3) angeordnetes Abstandhalterteil (17,18) umfassen,
**dadurch gekennzeichnet,**
**dass** das Abstandhalterteil (17,18) zwischen dem Basisteil (3) und dem Anschlagelement (2) quer zur Verstellrichtung des Anschlagelements (2) und parallel zur Plattenebene verschiebbar ist und mehrere, das Basisteil (3) und das Anschlagelement (2) zueinander in unterschiedlichen Abständen haltende Abschnitte unterschiedlicher Plattendicke (22,23) aufweist, wobei der Unterschied zwischen den Abständen jeweils einer Verschiebung des Anschlagelements (2) um eine Blechstärke des gehaltenen Blechbauteils (1) entspricht und zwischen den Abschnitten des Abstandhalterteils (17,18) eine Rampe (24) gebildet ist.

2. Vorrichtung nach Anspruch 1,
**dadurch gekennzeichnet,**
**dass** mehrere Abstandhalterteile (17,18) aufeinander gesetzt sind.

3. Vorrichtung nach Anspruch 2,
**dadurch gekennzeichnet,**
**dass** benachbarte Abstandhalterteile (17,18) in zueinander senkrechten Richtungen verschiebbar sind.

4. Vorrichtung nach einem der Ansprüche 1 bis 3,
**dadurch gekennzeichnet,**
**dass** das Abstandhalterteil (17,18) in einer Führung verschiebbar ist.

5. Vorrichtung nach einem der Ansprüche 1 bis 4,
**dadurch gekennzeichnet,**
**dass** eine das Anschlagelement (2) und das Basisteil (3) zusammenhaltende Feder (33) vorgesehen ist.

6. Vorrichtung nach einem der Ansprüche 1 bis 5,
**dadurch gekennzeichnet,**
**dass** das Abstandhalterteil (2) gegen die Kraft einer Feder (33) verschiebbar ist.

7. Vorrichtung nach einem der Ansprüche 1 bis 6,
**dadurch gekennzeichnet,**
**dass** das Abstandhalterteil (17,18) eine Aussparung (19) aufweist, die von einem Führungselement einer das Anschlagelement (2) in Verstellrichtung leitenden Führung durchsetzt ist.

8. Vorrichtung nach Anspruch 7,
**dadurch gekennzeichnet,**
**dass** die Führung einen von dem Anschlagelement (2) oder/und Basisteil (3) vorstehenden Stift (11) umfasst.

9. Vorrichtung nach Anspruch 7 oder 8,
**dadurch gekennzeichnet,**
**dass** die Führung einen Schwertstift (14) umfasst.

## Claims

1. Device for holding sheet metal components (1), which are to be measured, of a vehicle body work in a reference position, with a stop element (2) to be placed against the sheet metal component (1), a base part (3) carrying the stop element (2) and means for adjusting the position of the stop element (2) relative to the base part (3), the means comprising at least one single-part spacer part (17, 18) which is designed as a panel and is arranged between the stop element (2) and the base part (3),
**characterized in that**
the spacer part (17, 18) is displaceable between the base part (3) and the stop element (2) transversely with respect to the adjustment direction of the stop element (2) and parallel to the panel plane and has a plurality of sections of differing panel thickness (22, 23) holding the base part (3) and the stop element (2) at different distances from each other, wherein the difference between the distances corresponds in each case to a displacement of the stop element (2) by a sheet metal thickness of the sheet metal component (1) held, and a ramp (24) is formed between the sections of the spacer part (17, 18).

2. Device according to Claim 1,
**characterized in**
**that** a plurality of spacer parts (17, 18) are placed on one another.

3. Device according to Claim 2,
**characterized in**
**that** adjacent spacer parts (17, 18) are displaceable in mutually perpendicular directions.

4. Device according to one of Claims 1 to 3,
**characterized in**
**that** the spacer part (17, 18) is displaceable in a guide.

5. Device according to one of Claims 1 to 4,
**characterized in**
**that** a spring (33) that holds the stop element (2) and the base part (3) together is provided.

6. Device according to one of Claims 1 to 5,
**characterized in**
**that** the spacer part (2) is displaceable against the force of a spring (33).

7. Device according to one of Claims 1 to 6,
**characterized in**
**that** the spacer part (17, 18) has a recess (19) through which a guide element of a guide directing the stop element (2) in the adjustment direction passes.

8. Device according to Claim 7,
**characterized in**
**that** the guide comprises a pin (11) protruding from the stop element (2) or/and base part (3).

9. Device according to Claim 7 or 8,
**characterized in**
**that** the guide comprises a sword pin (14).

## Revendications

1. Dispositif pour le maintien dans une position de référence de composants en tôle (1) à mesurer d'une carrosserie de véhicule, comprenant un élément de butée (2) à appliquer contre le composant en tôle (1), une pièce de base (3) qui porte l'élément de butée (2) et des moyens pour déplacer la position de l'élément de butée (2) relativement à la pièce de base (3), qui incluent au moins une pièce de maintien d'écartement (17, 18) d'un seul tenant, réalisée sous forme de plaque et agencée entre l'élément de butée (2) et la pièce de base (3),
**caractérisé en ce que**
la pièce de maintien d'écartement (17, 18) est déplaçable entre la pièce de base (3) et l'élément de butée (2) transversalement à la direction de déplacement de l'élément de butée (2) et parallèlement au plan de la plaque, et comprend plusieurs portions, maintenant la pièce de base (3) et l'élément de butée (2) à différentes distances l'une par rapport à l'autre, ayant des épaisseurs de plaques différentes (22, 23), dans lequel la différence entre les distances correspond respectivement à un déplacement de l'élément de butée (2) à raison d'une épaisseur de tôle du composant en tôle (1) maintenu, et une rampe (24) est formée entre les portions de la pièce de maintien d'écartement (17, 18).

2. Dispositif selon la revendication 1,
**caractérisé en ce que** plusieurs pièces de maintien d'écartement (17, 18) sont posées les unes sur les autres.

3. Dispositif selon la revendication 2,
**caractérisé en ce que** des pièces de maintien d'écartement (17, 18) voisines sont déplaçables dans des directions perpendiculaires l'une par rapport à l'autre.

4. Dispositif selon l'une des revendications 1 à 3,
**caractérisé en ce que** la pièce de maintien d'écartement (17, 18) est déplaçable dans un guidage.

5. Dispositif selon l'une des revendications 1 à 4,
**caractérisé en ce qu'**il est prévu un ressort (33) qui maintient l'élément de butée (2) et la pièce de base (3) ensemble.

6. Dispositif selon l'une des revendications 1 à 5,
**caractérisé en ce que** la pièce de maintien d'écartement (2) est déplaçable à l'encontre de la force d'un ressort (33).

7. Dispositif selon l'une des revendications 1 à 6,
**caractérisé en ce que** la pièce de maintien d'écartement (17, 18) comporte un évidement (19), qui est traversé par un élément de guidage d'un guidage qui mène l'élément de butée (2) en direction de déplacement.

8. Dispositif selon la revendication 7,
**caractérisé en ce que** le guidage inclut une tige (11) qui dépasse depuis l'élément de butée (2) et/ou depuis la pièce de base (3).

9. Dispositif selon la revendication 7 ou 8,
**caractérisé en ce que** le guidage comporte une tige (14) en forme de lame.
